# EUROPEAN PATENT APPLICATION

(11) **EP 2 130 877 A1**
(43) Date of publication of application: **09.12.2009**
(21) Application number: 08157766.0
(22) Date of filing: 06.06.2008
(51) Int. Cl.: C09D 5/00, A61K 9/00

(54) **Gel compositions**

(71) Applicant: Fibac ApS, 4000 Roskilde (DK); Enpro ApS, 2100 Copenhagen Ø (DK)
(72) Inventor: Schaumburg, Kjeld, 2730 Herlev (DK); Wallström, Eva, 2100 Copenhagen (DK)
(74) Representative: Benthin, Stig

(57) **Abstract**

The present invention relates to gel compositions comprising at least one entrapped active component.

## Description

### FIELD OF THE INVENTION

The present invention relates to the field of gels and the use of gels as means for storage and controlled release of compounds therefrom.

### BACKGROUND OF THE INVENTION

Sol-gel chemistry has been used for many years. Most research has been directed towards inorganic gels created by hydrolysis of metal alkoxides. NASA has developed aerogels where the strength and the heat insulation properties of these materials have been optimized. Many other scientists have been reporting on the use of gels and aerogels for control of drug delivery. Here the gel performs the role as a sponge absorbing medically active compounds for later slow release. The process of interest is here diffusion out of the inert gel material. Yet another direction of research has been to encapsulate large active compounds like proteins or even live bacteria or cells into the gel network. It has been found that in many cases the enzymes encapsulated in the gel retain their activity. In special cases as observed with Lipases they may even display significantly enhanced activity when located in the gel network. The gel is thus used as a bioreactor where the enzyme is staying fixed while the reactants and the products diffuse in and out of the very open gel network. Also in these last two situations it is important that the gel is strong and that it can retain its properties during the processes.

Aerogel particles have been proposed for use in controlled release of pharmaceuticals, see e.g. US 6,994,842 B2.

Active compounds are a necessity for protection against biological growth in the coatings field. Due to environmental restrictions against traditional biocides and fungicides the need for more environmentally acceptable solutions is growing. Even though attempts to use enzymes and/or other organic active compounds can be found in literature the success is restricted. Incorporating this type of active compounds in a paint or coating is not an easy task.
In paints containing enzymes such as proteases the water-borne systems may have stability problems since sedimentation during storage result in a pigment and binder precipitate and a water enzyme liquid phase. During storage the enzyme react in an autodegradation whereby the enzyme activity is significantly reduced.
For this purpose it would be highly significant if the enzyme could be prevented from degradation during storage.
There is also a need to keep the active compound on the coating surface in an effective dosage to get a proper protection.

Furthermore it must be considered that different types of coatings depending on the application probably will need different solutions to the dosage problem.
Aerogels have been known to be useful as additives in paint formulations since they among other properties may introduce thixotropic properties. This property allows industrial spraying of thicker films of good quality.
WO 2002/074868 discloses thixotropic paint formulations comprising silica aerogel.

### SUMMARY OF THE INVENTION

In order to overcome the above-mentioned limitations of the known compositions for entrapment, storage and subsequent controlled release of one or more active components, the present invention provides a composition comprising a gel wherein is entrapped at least one active component such that release of said at least one active component from said composition is substantially caused by degradation of said gel.

In one aspect the present invention relates to a composition comprising an aerogel wherein is entrapped at least one active component such that release of said at least one active component from said composition is substantially caused by degradation of said aerogel.

In one embodiment of the invention said at least one active component substantially is not liberated from said composition by diffusion out of said composition.

In one embodiment of the invention said at least one active component comprises at least one enzyme.
In another embodiment said at least one active component comprises at least one enzyme and at least one substrate for said at least one enzyme.
In another embodiment said at least one active component comprises at least one bacteriophage.

### DEFINITIONS

The term sol as used herein means a solution of various reactants that are undergoing hydrolysis and condensation reactions. The molecular weight of the oxide species produced continuously increases. As these species grow, they may begin to link together in a three-dimensional network.

The term alcogel as used herein means a wet gel which can be removed from its original container and can stand on its own. An alcogel consists of two parts, a solid part and a liquid part. The solid part is formed by the three-dimensional network of linked oxide particles. The liquid part (the original solvent of the Sol) fills the free space surrounding the solid part. The liquid and solid parts of an alcogel occupy the same apparent volume.

The term supercritical fluid as used herein means a substance that is above its critical pressure and critical temperature. A supercritical fluid possesses some properties in common with liquids (density, thermal conductivity) and some in common with gases (fills its container, does not have surface tension).

The term aerogel as used herein means what remains when the liquid part of an alcogel is removed without damaging the solid part. Removal of the liquid part can be achieved by e.g. supercritical extraction. If made correctly, the aerogel retains the original shape of the alcogel and at least 50% (typically >85%) of the alcogel's volume.

The term xerogel as used herein means what remains when the liquid part of an alcogel is removed by evaporation, or similar methods. Xerogels may retain their original shape, but often crack. The shrinkage during drying is often extreme (∼90%) for some xerogels.

The term cryogel as used herin means what remains when an alcogel is frozen and the previously liquid part of the alcogel is removed by evaporation keeping the alcogel frozen all the time. Cryogels may retain their original shape, but often crack. The shrinkage during drying may be substantial for some cryogels.Addition of suitable surfactants in the alcogel may relieve this problem.

The term substantially as used herein means considerably, such as when expressed as a percentage at least 25%, such as at least 40%, such as at least 50%, such as at least 75%, such as at least 85%, such as at least 95%. For instance "release of X is substantially caused by degradation of said gel" means that release of X is caused considerably by degradation of said gel.

### DETAILED DESCRIPTION OF THE INVENTION

The present invention reverse in a sense the priorities and thereby provides new areas of applications.
According to the present invention active compounds, microorganisms and viruses may be entrapped in the gel. Active compounds may be entrapped in the gel by e.g. the SOL-GEL process. Since pores in the gel frequently will be between 1 and 20 nm the network is capable of encapsulating large active compounds where the gel network creates bottleneck for passing. Other smaller active compounds may be retained by the strong interaction with the cavity walls in the gel. Thus the active compounds of interest as active components for the invention are active compounds displaying no pronounced tendency to leach out of the gel.
This encapsulation of organic active compounds set the loaded gels apart from the first class of applications mentioned above. The focus on active compounds permanently entrapped in the gel set the invention apart from the second class. The entrapment still concurs with the third class.
The loaded gel prepared in the liquid form or as an aerogel, cryogel or xerogel is designed by its chemical composition to be degradable under the conditions where it is planned to be used. The degradation may be chemical - as it happens with hydrolysis in water - where the pH of the water strongly influences the hydrolysis rate of metal alkoxy based gels. The degradation may however be purely mechanical as it is occurring when grains of the gel are present at a surface where friction wears down the grains.
By this design the gel differs markedly from the classes 2 and 3 and in most cases from class 1 since optimization of strength occurs for a completely different set of criteria in the space research.

The encapsulation of active compounds in the gel may have a number of effects to be exploited in the present invention changing the release profile during gel decomposition.
- They may be protected against degradation as an effect of their spatial confinement
- They may be showing increased thermal stability due to their interaction with the gel structure
- They may show improved stability towards irradiation stability due to their interaction with the gel structure
- Their release are controlled by the degradation of the gel lattice
- Active compounds may be functionalized in such a manner that the functionalized active compound can be acting as an active component in the network formation. The covalent binding to the gel network may result in a release of an active compound still linked to fragments of the gel network.
   Often it is a problem to disperse a hydrophilic substance in a hydrophobic solvent and visa verse. By inclusion of the substance in the gel it is possible to control the distribution in the solvent by tailoring the polarity of the gel.
- Hydrophilic bioactive compounds may be included in a hydrophobic gel thereby ensuring their homogeneous distribution in a hydrophobic solvent.
- By production of an aerogel, cryogel or xerogel the release will be determined by the grain size and composition of the gel.
- Many variations of the gel structure are possible in order to control degradation. They include mixing of various metal alkoxides, introduction of alkyl or aryl substituents on some of the alkoxides
- The gel properties may also be modified by introduction of polymers as part of the original sol. Subsequently they will be entrapped and end up as part of the gel network.
- A manufacturer may optimize a composition including gel including one entrapped species. Replacement of the entrapped species with another does not require renewed optimization since the gel retains its physical properties independent of the entrapped species.
- Several gels with different entrapped species may be mixed as powders to obtain a desirable effect.
- Several active compounds may be incorporated in the same sol/gel since the species are entrapped individually their effects are not affected by potential mutual interactions
- The sol gel process may be carried out in such a manner that two or more different compounds are entrapped in different regions of the same gel. This requires the gelation process to be interrupted for each addition of an entrapped species.
- Two or more compounds may be entrapped and selected so that upon their release they can chemically react whereby new products are formed. An enzyme and a substrate may serve as an example. The reaction products may be small highly reactive active compounds

The gels prepared according to this invention have applications in:
- Coatings in general, e.g. paint, ink, lacquer products where the film thickness warrants the integration of gel structures.
- In surfaces on medical devices
- In plast composites
- The known property as a thixotropic component in coatings may be combined with the properties obtained by this invention
- As a consequence of the regulations on chemicals and biocides derivatives of active active compounds are considered as new species requirering individual risk assessments. By entrapment the active compounds are not chemically modified but their effects are controlled. This may result in considerable time and financial savings.

### Solvent based coatings.

Even though the use of solvent-based coatings has been restricted it is still an area of importance. Introducing an aerogel in a solvent-based paint has the following effects:
- Structure is introduced into the wet paint at low shear rates
- The degradation rate of the coating increases
- Water up-take is increased compared to coatings without aerogels, but still low due to the fact that solvent-based coatings are normally very dense
- The release of an active component can be controlled as the release will be related to the degradation effect

As possible application areas can traditional solvent-based paints for outdoor protection be mentioned. It should be acknowledged that the choice of the optimal binder systems used is important. The above concept based on degradation over time mainly can be used on materials, where the degradation time is acceptable. One example is coatings for wood (alkyds have always degraded due to the climate (sun and rain)), roofs, etc.
It should be mentioned that during the grinding process of the paint/coating there will be a small not intentional release of the active component from the aerogel due to mechanical forces applied to the surface of the formulation. The proportion of active component release is not expected to be significant as the aerogel particles aimed for in the paint still have a small surface to volumen ratio.

### Water-borne coatings.

There is a demand for water-borne coatings in general. Water-borne coatings are used on a large scale for architectural paints, wood protection etc. But at the same time water-borne coatings are used on a very small scale in the yacht market and heavy-duty products.
As an example an anti-fouling yacht paint can be mentioned.
To achieve a desired polishing rate the coating has to degrade due to mechanical friction.
The parameters that influence the polishing rate is the choice of binders, their concentration as well as the choice of pigments/fillers and their concentration.

Introducing an aerogel in a water-borne anti-fouling paint has the following effects:
- The polishing rate of the coating increases
- Water up-take is increased significantly compared to coatings without aerogels

The water up-take can be reduced in several ways:
- Introducing a hydrophobic agent, which probably is not enough on its own
- Changing the aerogel composition and thus making the film more water resistant.

It is relevant to reduce water up-take to achieve a commercially acceptable anti-fouling paint.

It should be mentioned that water-borne coatings are very important today. Outdoors it is important to achieve protection against bio-films on wood, houses, roofs etc.

But also indoors problems with bacteria and fungi is essential especially in wet rooms.

In another aspect the present invention provides an aerogel modified by an interpenetrating network of a polymer. The polymer is chosen to fulfil the criteria:
1. it is water soluble or dispersible
2. it is compatible with the formation of the aerogel network
3. it is actively promoting the molecular dispersion of the enzyme in the gel network. If this is not possible the polymer should be acting as a neutral component not hampering the dispersion of the enzyme in the gel network.
4. The interpenetrating polymer aerogels network should result in particles that may be dispersed in the organic phase of the liquid paint
5. The polymer should reduce the water uptake or water uptake rate in the aerogel in such a manner that the polishing rate for the paint film is reduced.
6. The molecular weight of the polymer should be so large that physical entanglement in the aerogel leads to an efficient immobilization. At the same time the polymer molecular weight should not exceed the limit where its introduction in the gel-forming step would result in an unacceptable increase of the viscosity.

As a nonexclusive criterion it is relevant to include polymers where the environmental and toxicological clearances already have been obtained. Examples of such substances are polyethyleneglycols, polylactic acid, polyvinylalkohol, polyvinylpyrrolidone, poly-lysine, heparins, poly-hyaluronic acid, polysaccarides and many more.

The aerogel is typically silica based. Silica aerogels may be prepared according to traditional microparticle sol-gel processing. The silicon may fully or partly be replaced by other tri or tetra valent metal ions.

According to another aspect of the present invention it is possible to store, preserve and release enzymes from an aerogel used as a component in a surface film. In the case of biofouling a bacterial film is rapidly formed on the surface. The success of the aerogel containing enzyme rely on the controlled availability of sufficient large quantities of enzyme at a give time to impede or reduce the evolution of the biofilm and the settlement of algae, mussels and barnacles in the bacteria film.

Various enzymes may be suitable as an active components in the composition of the present invention.
In one embodiment the enzyme is selected from the group consisting of hemicellulolytically active enzymes, amylolytically active enzymes and/or cellulolytically active enzymes.

In another embodiment the at least one enzyme or protein comprises at least one endopeptidase.

In another embodiment the at least one endopeptidase comprises a subtilisin (EC 3.4.21.62). The subtilisin (EC 3.4.21.62) has the following characteristics: (i) optimum activity at a pH
in the range of about 7 - 10, and (ii) optimum activity at a temperature in the range of
about 55 - 65°C. In another embodiment the subtilisin is Alcalase.

In another embodiment the hemicellulolytically active enzyme(s) is selected from the group consisting of endo-1,4-beta-xylanase (E.C. 3.2.1.8), xylan endo-1,3-beta-xylosidase
(E.C. 3.2.1.32), glucuronoarabinoxylan endo-1,4-beta-xylanase (E.C. 3.2.1.136), betamannosidase (E.C. 3.2.1.25), mannan endo-1,4-beta-mannosidase (5 E.C. 3.2.1.78) and mannan endo-1,6-beta-mannosidase (E.C. 3.2.1.101). In another embodiment the hemicellulolytically active enzyme is a xylanase. In another embodiment
the xylanase is an endo-1,4-beta-xylanase (E.C. 3.2.1.8).

The amylolytically active enzyme(s) can in one embodiment be an amylase.

In another embodiment the one or more amylolytically active enzyme(s) is selected from the group consisting of α- and β-amylases, amyloglucosidases (E.C. 3.2.1.3), pullulanases, α-1,6-endoglucanases, α-1,4-exoglucanases and isoamylases.

The one or more amylolytically active enzyme(s) can also comprise a amyloglucosidase. In one embodiment the amyloglucosidase is an 1,4-alpha-glucosidase.
In one embodiment the composition comprises one or more gel(s) and at least one xylanase and at least one amyloglucosidase.
In another embodiment the anti-fouling composition comprises one or more gel(s) and at least one endo-1,4-beta-xylanase (E.C. 3.2.1.8) and at least one 1,4-alpha-glucosidase (E.C. 3.2.1.3).
In another embodiment the composition comprises a hexose oxidase, such as glucose oxidase (E.C. 1.1.3.4). In yet another embodiment the composition comprises glucose oxidase (E.C. 1.1.3.4) and glucose or a polymeric form of glucose. In another embodiment the composition comprises glucose oxidase (E.C. 1.1.3.4), a polymer comprising glucose moieties and an enzyme capable of hydrolysing at least part of said polymer in order to liberate glucose.

In another embodiment the composition comprises one or more gel(s) and at least one chitinase (E.C. 3.2.11.14).

In yet another aspect the present invention provides an aerogel comprising at least one bacteriophage. Bacteriophages are much smaller than the bacteria they destroy - usually between 20 and 200 nm in size. Bacteriophages are viruses targeting and preying on bacteria. In this sense they are universally present in low concentrations. They are highly specific and therefore constitute no danger for species outside the family of bacteria for which they are targeted.

Bacteriophages are not capable of multiplying unless they are prying on the bacteria they target. They are seen as a possible therapy against multi drug resistant strains of many bacteria. As complex proteins they themselves can naturally be attacked and consumed by other organisms.
From a suspension containing bacteriophages they may be immobilized by conversion of the suspension to a hydrogel. Once encaged in the gel network the bacteriophages are restricted in their motion and they cannot get contact to the bacteria the pray on. Conversely the organisms that might consume or otherwise destroy the bacteriophages cannot get access to them due to the gel network. The hydrogel network may by a suitable treatment be disintegrated to small fragments the size of micrometers. Still the bacteriophages will be encapsulated in these fragments. These small fragments are distributed in a paint formulation and applied to create a coating. During degradation (with antifouling paint it will be polishing rate) of the paint bacteriophages will slowly be released. If a biofilm with the target family of bacteria grows on the surface of the paint the bacteriophages will rapidly attack the bacteria and multiply as long as the family of bacteria is present on the surface. The constant release of a low dose of bacteriophages will stabilize this scenario and prevent the formation of colonies of bacteria of the selected type. In August, 2006 the US FDA approved the use of bacteriophages on cheese to kill the *Listeria monocytogenes* bacteria, giving them GRAS status (Generally Recognized As Safe). In July 2007, the same bacteriophages were approved for use on all food products.

From biological studies of early settlement on clean surfaces it is known, that the colonization of a given surface typically is performed by a limited number of bacteria. The species performing this function may vary in different regions on the globe. It is completely feasible to use a cocktail of several relevant bacteriophages in the formation of the hydrogel. Hereby the attack on the biofilm bacteria will be on all the relevant bacteria and the resulting destruction of the biofilm more complete.
• Non-limiting examples of **lytic** bacteriophages suitable for used according to the present invention is lambda phage, T2 phage, T4 phage and T7 phage.
• Other phage which may be used are : T12 phage, R17 phage, M13 phage, MS2 phage, G4 phage, P1 phage, P2 phage, Phi_ X 174 phage, N4 phage, Φ6 phage, Φ29 phage and 186 phage.

For the practical use of the invention it will not suffice to create a hydrogel. Following normal procedures the gel particles should be suspended in the organic phase of the paint. Here hydrogels are a poor choice since they will be polar and incompatible with the organic phase. For most applications the conversion of the hydrogel to an aerogel/cryogel will be required. After this conversion the dried gel can be suspended in the organic phase. This ensures a better distribution in the coating film and a better storage stability.
It is central to this invention that it is possible to convert the hydrogel into aero/cryogel without significant losses in bacteriophage activity.
The present invention relates to the following aspects :
1. Use of a gel containing bacteriophages as a component of an antifouling paint or other antibacterial paint/lacquer and coatings.
2. preparation of an aerogel containing bacteriophages as a component of an antifouling paint and coating.
3. preparation of a cryogel containing bacteriophages as a component of an antifouling paint and coating.
4. preparation of a xerogel containing bacteriophages as a component of an antifouling paint and coating.
5. preparation of an aerogel/cryogel/xerogel containing bacteriophages that may be released in an active form from the gel.

According to the present invention the bacteriophages need not be chemically modified. Therefore it is not necessary to introduce new substances to the environment. The gel-forming substances may be chosen to be based on metal oxides beneign to the organisms and the environment.

In one embodiment the invention relates to a composition comprising a gel wherein is entrapped at least one enzyme such that release of said at least one enzyme from said composition is substantially caused by degradation of said gel. In another embodiment of the invention the composition comprising an aerogel wherein is entrapped at least one enzyme such that release of said at least one enzyme from said composition is substantially caused by degradation of said gel.
In another embodiment the present invention relates to the use of a composition comprising a gel wherein is entrapped at least one enzyme such that release of said at least one enzyme from said composition is substantially caused by degradation of said gel as an anti-fouling agent on ships. In another embodiment the present invention relates to the use of a composition comprising a aerogel wherein is entrapped at least one enzyme such that release of said at least one enzyme from said composition is substantially caused by degradation of said gel as an anti-fouling agent on ships.

### EXAMPLES

### Example 1, Enzymes incorporated in a silica aerogel for solvent-based paints and coatings.

1) 57.4 g TMOS (Tetramethyl orthosilicate 98% from Aldrich) and 229.2 g Methanol (Methanol reagent PH. EUR. from Bie & Berntsen) was mixed on a magnetic stirrer in a 1L Erlenmeyer flask for 15 minutes.
2) 200 mL Esperase solution (HPF from Novozymes) was dialysed and freeze dried. There was obtained 18.40 g dry enzyme, which was dissolved quickly (about 5 minutes) in 60 mL milli-Q water and the viscous solution was added drop wise to 1) during mixing. The solution was mixed for additionally 15 minutes.
3) 0.933 g of ammonium hydroxide (28-30% solution from Bie & Berntsen) dissolved in 7.50 g of milli-Q water was added dropwise to 2) during mixing at full speed (1500 RPM) on the magnetic stirrer. After additionally 2 minutes of mixing, the white opaque solution was transferred into a 1L bluecap bottle. After approx. ½ hour, the gelation took place and the obtained 410 mL gel was aged in methanol, for 24 hours at room temperature, before drying.
4) 287 g of the wet gel from 3) was cut into smaller pieces and transferred under methanol to a ½ L pressure vessel (½ L flow reactor, equipped with heating jacket and metal frits in both ends, from Thar designs). There the gel was flowed with ½ L of methanol at 0.5mL/min. Then the temperature in the heating jacket was raised to 50°C and the pressure raised to 100 bars, at a rate of 3 bars/min. During 8 hours at 50°C and 100 bars, 2½ kg of CO₂ was flowed trough the wessel at a rate of approximately 6 mL/min measured at 10°C. After flowing the pressure was slowly released during severel hours. The weight of the supercritical dryed aerogel was 34.23 g.

### Example 2, Enzymes incorporated in a silica aerogel for water-borne paints and coatings.

1) 28.6 g TMOS (Tetramethyl orthosilicate 98% from Aldrich) and 111.0 g Methanol (Methanol reagent PH. EUR. from Bie & Berntsen) was mixed on a magnetic stirrer in a 1L Erlenmeyer flask for 15 minutes.
2) 0.752 g PVA (Polyvinyl alcohol, with a degree of polymerisation of 2000 and a degree of hydrolysation of 86-89 mol%, from Fluka Chemika) was wetted with 5 mL methanol and dissolved in 30 mL milli-Q water. 100 mL Esperase solution (HPF from Novozymes) was dialysed and freeze dried. Thereby 6.279 g dry enzyme was obtained, which was dissolved quickly (about 5 minutes) in the PVA solution and the obtained viscous enzyme solution was added drop wise to 1) during mixing. The solution was mixed for additionally 15 minutes.
3) 0.517 g of ammonium hydroxide (28-30% solution from Bie & Berntsen) dissolved in 3.737 g of milli-Q water was added dropwise to 2) during mixing at full speed (1500 RPM) on the magnetic stirrer. After additionally 2 minutes of mixing, the white opaque solution was transferred into a 1L bluecap bottle. After 15 minutes the gelation took place and the obtained 200 mL gel was aged in methanol, for 24 hours at room temperature and additionally 6 days at 5°C, before drying.
4) 176.8 g of the wet gel from 3) was cut into smaller pieces and transferred under methanol to a ½ L pressure vessel (½ L flow reactor, equipped with heating jacket and metal frits in both ends, from Thar designs). There was flowed with ½ L of methanol at 0.5mL/min. Then the temperature in the heating jacket was raised to 50°C and the pressure raised to 100 bars, at a rate of 3 bars/min. During 8 hours at 50°C and 100 bars, 2½ kg of CO₂ was flowed trough the wessel at a rate of 5-7 mL/min measured at 10°C. After flowing the pressure was slowly released during severel hours. The weight of the supercritical dryed aerogel was 18.685 g.

### Example 3, Antifreeze protein incorporated in a silica aerogel for water-borne coatings.

Production of antifreeze proteins have recently been described in a patent application disclosed by its owner RUC. The antifreeze protein from *Rhagium mordax* may be taken as an example. The protein has been expressed in a microorganism. The antifreeze protein is therefore available in a solution similar to the Espherase used in example 1 and 2. The procedure for creation of aerogels incorporating antifreeze proteins will therefore substantially be the same as used for Espehrase.

### Example 4. Bacteriophages incorporated in a silica gel

A suspension of *E. coli* T2 bacteriophages 10^12 pr ml can be used as replacement for the Espherase solutions in the procedures described in example 1 and 2. The low temperature and pressure used in the formation of the aerogel is important for the viability of the bacteriophages during the aerogel formation.

### Example 5, Aerogels including enzymes, bacteriophages and/or other active components in a water-borne coating.

### 1) Water-borne antifouling composition

In water borne paints the inorganic aerogels have until now been of little use. It has been observed that in polishing water-borne paints the aerogel increases the water uptake, reduce hardness and thus may increase the rate of polishing to a level unacceptable for commercial vessels and fast sailing pleasure boats. In this case an aerogel with a polymer included was introduced into a water-borne yacht paint composition.

| Component | Amount in weight-% |
|---|---|
| 1. Propylenglycol (co-solvent) | 10 |
| 2. Water | 10 |
| 3. Orotan 850 EL, 30% (dispersion agent) | 1,4 |
| 4. TEA (amine) | 0,2 |
| 5. Aerogel AP50 | 1 |
| 6. Zinkoxide Code 620 (pigment) | 43 |
| 7. Micro-talc A.T. 1 (filler) | 5 |
| 8. Lipaton X 6030* (acrylic emulsion) | 10 |
| 9. Synaqua 2070, 53% (alkyd emulsion) | 10 |
| 10. Tributoxyethylphosphate (coalescing agent) | 0,5 |
| 11. Mn-Hydro-cure 9% (direr) | 0,25 |
| 12. Co-HEX-CEM 10% (drier) | 0,09 |
| 13. Tego 1488 (anti-foaming agent) | 0,2 |
| 14. Water | 7,4 |
| 15. Acrysol RM 825 (thickener) | 1 |
| 13. Preservative | |
| **Totally** | **100** |

When comparing the properties of the above composition with a composition without polymer in the aerogel the following results are achieved:
- Water uptake (in artificial sea water) is not increased when increasing the aerogel (with polymer) content from 0,5 weight-% to 1 weight-%
- Water uptake(in artificial sea water) is increased when increasing the aerogel (without polymer) content from 0,5 weight-% to 1 weight-%
- The aerogel in itself increases degradation and thus polishing rate when introduced in the composition
- An aerogel including a polymer reduces the polishing effect to some extent.

This composition contains two binders, where one is degrading (alkyd) and the other is giving hardness (acrylic). The alkyde dispersion can of course be omitted if another binder is included that can contribute to degradation in sea water and thus to the polishing rate. The number of binders can be extended to three or more. The binders can be dispersions containing, alkyde or other polyesters, acrylic/acrylic copolymers, polyvinylacetate, urethanes, rosins, water-soluble resins etc.
Furthermore, the pigment chosen in this case contributes to the polishing rate. Other choices of pigments could contain other metals as titanium (rutile and/or anatase), iron, manganese, molybdenum, etc. It is also possible to use organic pigments in the composition.
Likewise can other fillers, film formers (coalescing agents), co-solvents, thickeners and other additives be used.
The aerogel should be regarded as an additive, where the amount normally will be under 10 % and in most cases significantly less than 5 %. The reason is that the aerogel introduces a different rheological behaviour of the wet product as well as other mechanical properties of the dry coating.
It should be noted that the dispersion agent is chosen to fit to the pigment in the specific type of paint/coating. In this connection the aerogel might have an impact on the choice and amount of dispersion agent.
The amount of each component is optimised in the specific composition/formulation.

To make a formulation that have the desirable functionality is thus not only a question of using one or the other binder, pigment etc., but a question of choosing an aerogel which fits for the purpose and dosing the amount of formulated aerogel in the correct amount to achieve the physical parameters and the protection against biological growth needed for the application in question.

In this example important physical parameters for the coating film are:
- Polishing rate; is decided by the type of vessel or pleasure boat the product is aimed for. Thus a low polishing rate for ships sailing continuously and a higher polishing rate for the yacht market.
- Water uptake; a water-borne coating should not exceed 20 weight-% of water pick-up when exposed to artificial sea water. A high amount of water in the film reduces hardness and increases the degradation where these effects will reduce the protective period and thus be fatal for the coating. As an example a yacht paint should function for at least one sailing season.
- Hardness; the pendulum hardness should be of the same level as other commercial products used in the application area aimed for.

This type of composition can also be formulated as a clear coating to be used either as an anti-fouling coating or as a coating above the water line.

### 2) Water-borne architectural paint for walls and ceilings

One starting formulation is :

| Component | Approximate amount in weight-% |
|---|---|
| Water | 33 |
| Dispersion agent | 0,1 |
| De-foamer | 0,2 |
| Preservative | 0,3 |
| Amine (pH-control) | 0,02 |
| Co-solvent & coalescing agent (function: application and film forming) | 1 |
| Pigment (in-organic and/or organic) | 4 |
| Fillers (Silicates, carbonates, talcum etc.) | 50,5 |
| Thickeners (e.g. HEC) | 0,5 |
| Aerogel (incl. active component(s) | 1 |
| Water-borne binder emulsion styrene-acrylic /PVA etc. | 9 |
| Other additives (incl. cross-linkers, wetting agents, waxes etc.) | 1 |
| **Totally** | **100** |

The binder emulsion and binder emulsion amount is chosen in accordance with the use of the paint. In the same way is the type and amount of pigment and fillers chosen.
Examples of binder emulsions that might be used are styrene-acrylics, acrylic-copolymers, vinyl acetates, vinyl acetate/ethylene, alkyds, PU-alkyds, polyurethanes etc. Also in this case water-soluble polymers can be included in a formulation. Due to environmental regulations it is expected that co-solvents and coalescing agents will be minimized further.
The largest use is expected were anti-bacterial surfaces are needed. This means that making a wall paint for hospitals may include an aerogel with bacteriophages (and/or enzymes) that can reduce the risk in connection with certain diseases. In the same way aerogels may be designed with active components for use in wet rooms.

### 3) Water-borne wood stain and wood finishes (incl. Floors)

A wood stain is basically prepared in the same manner as an architectural paint for walls and ceilings. Very often is an alkyd emulsion used in combination with an acrylic emulsion. It can also be a hybrid binder emulsion, e.g. core-shell technology. Furthermore, the possibility of using water-soluble alkyd resins is available. Polyurethane dispersions alone or in combination with acrylic emulsions/water-dilutable polyester resins or self-crosslinking acrylic emulsion among other possibilities can also be mentioned. 2C systems is an option. In this type of composition nano particles may also be present to achieve specific physical properties.
Again a designed aerogel will be necessary to achieve the desired (slow) degradation over time matching the protection against biofilm and biological growth for the given application. Even though most of the applications on wood is outdoors there will be specific applications indoors as well (i.e. floors, windows).

### 4) Water-borne roof composition

The difference in the composition from a wood stain is mainly the choice of binder and pigmentation. But the problem is the same with regard to biological growth. Which means that a designed aerogel with enzyme(s) and/or other active component are used in this type of coating with a slow degradation rate. We would expect that the same type of aerogel as for wood stain is to be used.

### 5) Water-borne coatings for materials that are intended for contact with food

In this case, the components in the water-borne coating must be approved of, according to e.g. EU regulation at the time being. Since bacteroiophages can be used against the *Listeria monocytogenes* bacteria it may also be used against *Salmonella*, which may be of interest in connection with materials in direct as well as in-direct contact with food.
Such uses may include prints on materials as paper, plastic, metal foils etc.
Furthermore, the use is not restricted to one specific printing method or one specific use of printed matter.

### 6) Other water-borne products

The use of aerogels can be extended to roof compositions, floor polishes, glues, lacquers, primers, sealers, anti-graffiti products etc. Aerogels including active components is also of interest for coatings used on plastic, concrete and steel. The applications are both for DIY (do-it-yourself) products as well as for industrial applications.

### 7) Extending the practical use of water-borne coatings

Using aerogels including antifreeze protein may extend the use of water-borne products with regard to application. Being able to apply a product at low temperatures and still get film forming is of great industial relevance as well as being able to extend shelf life at low temperatures.

### Example 6, Aerogels including enzymes, bacteriophages and/or other active components in a solvent-based coating.

### 1) Solvent-based wood stain and wood finishes (incl. Floors)

One starting formulation is :

| Component | Approximate amount in weight-% |
|---|---|
| Solvent, e.g. white spirit | 6,25 |
| Dispersion agent, e.g. soya lecithin | 0,6 |
| Pigment (in-organic and/or organic), e.g. titaniumdioxide | 6,9 |
| Fillers (carbonates, silicates etc.) | 45,9 |
| Binder Alkyd, polyamide modified alkyds, vegetable oil, PUR-alkyds other polesters, other modified alkyds, etc. May be a combination of 2 or more resins. | 30,75 |
| Aerogel (incl. active compounds.) | 1 |
| Thickeners, e.g. Bentone | 2 |
| Other additives , driers (eg. Co, Mn, Zr), MEKO, etc. | 2 |

A solvent-based wood stain is typically made with an alkyd binder system. It can also be combined with other binders (eg. polyesters, modified alkyds, rosins and vegetable oils).
Binder hybrids and/or copolymers are also a possibility.
In this case a designed aerogel with enzyme(s) and/or other active components will be used in a coating with a slow degradation rate. In the composition especially the choice of binders is clearly dependent of the application in question. Industrial coatings differ significantly from do-it-yourself products. High solids products is of course important in future.
Floor compositions are often solvent-based 2C binder systems.

### 2) Industrial compositions

Thermoplastic acrylic binders can be used in industrial compositions. Alkyds have in this type of application a short to medium oil length, mainly due to the drying time. Again the binders are often functionalised and can be used with different chemistry and in different combinations. Industrial compositions include products for coil coating and heavy-duty applications.
The use of aerogels in industrial applications is obvious with regard to the rheological properties achieved. Still the choice of active compounds has to be in accordance with the use of the coating.

### Example 7, Aerogels including enzymes, bacteriophages and/or other active compounds in other coatings.

Aerogels may find use in coatings that are dried in another manner than solvent-based or water-borne coatings. An examples are UV (or EB) drying coatings for floors and furniture. Here degradation may not be the purpose, but basically to achieve an antibacterial effect. The drying process can also be a combination of physical drying and radiation.

## Claims

1. A composition comprising a gel wherein is entrapped at least one active component such that release of said at least one active component from said composition is substantially caused by degradation of said gel.

2. The composition according to claim 1, wherein said gel is an aerogel, a xerogel or a cryogel.

3. The composition according to any of claims 1-2, wherein said at least one active component substantially is not liberated from said composition by diffusion out of said composition.

4. The composition according to any of claims 1-3, wherein said degradation of the gel is caused by mechanical wear, by hydrolysis, by UV radiation or by ultrasonication of the composition.

5. The composition according to any of claims 1-4 comprising two or more interpenetrating networks or semi interpenetrating networks of gel forming materials.

6. The composition according to claim 5, wherein said gel forming materials are selected from metal oxides based on Sc, Ti, V, Cr, Mn, Fe, Co, Y, Zr, Nb, Ru, Hf, Ta, W, Re, Si, Al, Ge, In, La, Pr, Nd, Sm, Eu, Gd, Tb, Dy, Ho, Er, Tm, Yb, Lu, and/or organic polymers such as polyvinyl alcohol, polyethylene glycol, polylactic acid, polypropylene glycol, polyvinylpyrilidone.
The gel may also be formed using organic crosslinkers such as but not limited to diisocyanates.

7. The composition according to any of claims 1-6 comprising at least one enzyme or protein.

8. The composition according to claim 7 wherein said at least one enzyme is selected from the group consisting of hemicellulolytically active enzymes, amylolytically active enzymes and/or cellulolytically active enzymes.

9. The composition according to claim 8 wherein said composition further comprises at least one substrate for said at least one enzyme.

10. The composition according to any of claims 1-5 comprising at least one bacteriophage.

11. The composition according to claim 10 comprising at least two different bacteriophages.

12. Use of the composition according to any of the preceding claims as a component of a water borne antifouling, antibacterial or biofouling/bioprotective paint or coating.

13. Use of the composition according to any of claims 1-11 as a component of a solvent based antifouling, anti-bacterial or biofouling/bioprotective paint or coating.

14. Film comprising the composition according to any of claims 1-11.

15. The film according to claim 13, which is a liquid film or a solidified liquid film.

16. Use of the composition according to any of claims 1-11 as an antifouling , antibacterial or biofouling/bioprotective agent.
